# EUROPEAN PATENT SPECIFICATION

(11) **EP 4 273 458 B1**
(45) Date of publication and mention of the grant of the patent: **25.02.2026**
(21) Application number: 23171942.8
(22) Date of filing: 05.05.2023
(51) Int. Cl.: F24D 11/00, F28D 20/00, F24S 60/30, F24S 23/70, F28D 7/10, F28D 7/12

(54) **DEVICE FOR STORING ENERGY AND METHOD THEREFOR**
VORRICHTUNG ZUM SPEICHERN VON ENERGIE UND VERFAHREN DAFÜR
DISPOSITIF POUR STOCKER DE L'ÉNERGIE ET PROCÉDÉ POUR CELLE-CI

(30) Priority: 06.05.2022 NL 2031792
(43) Date of publication of application: 08.11.2023
(73) Proprietor: Heatwacht Holding B.V., 8042 PS Zwolle (NL)
(72) Inventor: Wolters, Johannes Stephanus Josephus, 8042 PS ZWOLLE (NL)
(74) Representative: Arnold & Siedsma

(56) References cited:
- EP-A1- 3 936 806
- WO-A1-2012/169900
- WO-A1-2014/003577
- WO-A1-2020/065649
- AT-A4- 507 682
- CN-A- 108 266 781
- CN-U- 203 847 336
- NL-B1- 2 026 046

## Description

The present invention relates to a device for storing energy and a method for storing energy.

In practice buildings are becoming more and more self-sufficient in terms of energy. In order to achieve this, owners of buildings are increasingly often having solar panel installations installed on or close to their building. The solar panel installation generates current when the sun shines, wherein the generated current can be used in the building or can be fed back to the electricity grid. In practice the production of electricity is usually greater in summer than the energy consumption of the building, while in winter the production of electricity is smaller than the energy consumption of the building. On one hand, this is due to the greater electricity production of the solar panel installation in summer, and on the other hand due to the greater demand for energy in winter, since the building must also be heated in winter.

Devices for storing heat are known in practice for storing the overproduction of electricity in summer. A known device is shown in NL 2026046 B1. The device comprises a storage space with an energy storage material provided therein. A number of individual tubes are further positioned in the storage space. At least one heat storage element is arranged in the tubes. In an embodiment the tube is filled with a static thermal conductor, wherein the static thermal conductor may comprise synthetic oil.

WO 2012/169900 A1 relates to a thermal energy storage and heat exchange unit, comprising a solid state thermal storage material, a heat transfer fluid and means for energy input and output, distinctive in that: the storage comprises at least one heat transfer container, solid state thermal storage material is arranged around the heat transfer container, and the heat transfer container contains the heat transfer fluid and the means for energy input and output, so that all heat transferring convection and conduction by the heat transfer fluid takes place within the respective heat transfer container. Method of building the thermal energy storage, plant comprising the storage, method using the plant and use of the storage or plant.

AT 507 682 A4 relates to a tiled stove which has a container which consists of ceramic, marble, stone or glass or is at least covered on its outside with ceramic, marble, stone or glass. The container defines an interior space which is filled with a phase change material. A heat exchanger passes through the phase change material, the heat exchanger and at least one solar collector being arranged in a circuit of a heat transfer material, which can be heated in the solar collector and the heat exchanger can be supplied.

WO 2020/065649 A1 relates to a thermal-storage container used in thermal systems to exchange heat by fluid flow though phase-changing material disposed inside the thermal-storage container, including a thermal-storage container housing, a fluid inlet and a fluid outlet, and one or more capsules containing the phase- change material, and defining a plurality of passages configured to direct the flow of the fluid at different portions inside the housing, wherein an actual fluid flow length from the fluid inlet to the fluid outlet is longer than a direct length measured between the fluid inlet and the fluid outlet through all sections through which the fluid flows.

A drawback of the known device is that during heating of the energy storage material with the at least one heating element the thermal conductor may be heated to temperatures which are disadvantageous for the thermal conductor. When a thermal oil is used as thermal conductor, there is thus a risk of the thermal oil, particularly the thermal oil lying close to the electrical heating element, disintegrating as a result of the high temperature. This is disadvantageous because it lessens the thermally conductive action of the synthetic oil.

The present invention has for its object to obviate or at least reduce the above stated problems. It can be a particular object of the invention to provide a device with an improved thermal conduction during heating of the energy storage material.

This object is achieved with a device for storing energy according to claim 1.

The circulation of the fluid is enabled by the pump being provided and the number of individual tubes being in fluid connection. Circulation of the fluid prevents the fluid from becoming too hot, which would cause it to disintegrate and/or evaporate. This ensures the thermally conductive action of the fluid, whereby a more efficient device for storing energy is realized.

A further advantage is that energy can also be extracted from the energy storage material by the circulation of the fluid. The flow of the fluid through the tubes enables heat from the energy storage material to be absorbed in the fluid, which can then be fed out of the storage space by the throughfeed conduit. The fluid can thus be used on one hand, in a storage state of the device, to conduct heat to the energy storage material and on the other, in a discharge state of the device, be used to extract energy from the energy storage material. The storage state and discharge state can optionally be implemented at the same time.

Electrical energy can be converted into thermal energy by the electric heating element of the heat storage element, wherein the heat created by the electric heating element is then relinquished to the fluid and subsequently the energy storage material. A device which can store energy is hereby provided in simple manner. This makes it possible to store an amount of energy which may be superfluous at any point.

The fluid is preferably a thermal conductor. Owing to the pump and because the tubes are in fluid connection, a conductor which is not static is realized, i.e. conductor which is subject to flow.

Depending on the type of pump provided, the pump can alternatively also be arranged on or at the throughfeed conduit.

In an embodiment according to the invention the device comprises a three-way valve arranged in the throughfeed conduit, further comprising a discharge conduit which is connected to the three-way valve and is configured to be connected to a heat exchanger.

The discharge conduit preferably extends away from the three-way valve to a position outside the storage space. An insulating material is preferably arranged round the storage space, wherein the discharge conduit extends to a position outside the insulating material. The discharge conduit preferably extends to a position outside the device.

The fluid acquires its dual function in an effective manner owing to the three-way valve; on one hand the fluid provides for a good conduction of heat from the heat storage element to the energy storage material, and on the other the fluid can extract heat. In the storage state of the device, wherein the fluid conducts heat from the heat storage element to the energy storage material, the three-way valve is set to circulate the fluid in the throughfeed conduit and tubes. Hereby, the fluid does not lose any heat during circulation and the heat is retained in the device. In the discharge state of the device, wherein the fluid extracts heat from the energy storage material, the three-way valve is set to feed the fluid at least partially through the discharge conduit. The fluid can hereby relinquish the heat to a heat exchanger arranged on the discharge conduit in simple manner. A further advantage of the three-way valve is that a simple design of the device is obtained which realizes an effective storage function and extraction function of energy. Yet another advantage of the three-way valve is that setting of the storage state and discharge state can be automated in simple manner. The fluid discharged to the discharge conduit can alternatively or additionally be used directly in industrial processes, such as for industrial bakeries or steam boilers. The temperature of the fluid can thus be used efficiently for industrial processes wishing to run without natural gas, for instance.

In an embodiment according to the invention the device further comprises a heat exchanger which is connected to the discharge conduit.

Owing to the heat exchanger heat stored in energy storage material can be relinquished to for instance a home in simple manner. This provides the option of storing electrical energy from solar panels in the device in summer and then using this energy as heat in winter.

In an embodiment according to the invention the device further comprises an expansion tank which is connected to the throughfeed conduit and which is configured to accommodate expansion of the fluid during heating.

The expansion tank is preferably connected operatively to the throughfeed conduit, for instance with a feed conduit which extends from the throughfeed conduit to the expansion tank and a discharge conduit which extends from the expansion tank to the throughfeed conduit. In an embodiment the feed conduit and discharge conduit are provided on either side of the pump.

An advantage of the expansion tank is that the fluid can be fed to the expansion tank during expansion as a result of heating. This regulates the pressure of the fluid in the throughfeed conduits and tubes, whereby the fluid can circulate through the device effectively.

According to the invention the device further comprises a flow generating element which is arranged in at least a part of the number of tubes and which is configured to realize flow of the fluid in the tube.

The flow generating element is an element which is arranged in the interior space of the tubes. The flow generating element preferably comprises an element with a surface having a directional coefficient oriented at right angles to the flow direction in the tube. The flow direction in the tube preferably extends in the longitudinal direction of the tube.

An advantage of the flow generating element is that the flow in the tube is enhanced, this reducing the chances of standstill of fluid. This reduces the chances of the fluid disintegrating due to excessive heating, for instance because part of the fluid remains too close to the electric heating element.

According to the invention the flow generating element comprises an inner tube which is positioned between the tube and the heat storage element, wherein the inner tube defines an inner tube space between the inner tube and the storage element and an outer tube space between the inner tube and the tube, wherein the inner tube space and outer tube space are in fluid connection with each other.

The throughfeed conduit is preferably connected operatively to the inner tube space and connected operatively to the outer tube space. Owing to the operative connections to the inner tube space and outer tube space, wherein one of the operative connections preferably comprises a feed and another a discharge, the fluid is able to flow through the inner tube space and outer tube space. This reduces the chances of the fluid disintegrating due to excessive heating.

In an embodiment according to the invention the inner tube space is connected to a feed conduit and an outer tube space to a discharge conduit, wherein the fluid flows from the inner tube space to the outer tube space in use.

The feed conduit and discharge conduit both form part of the throughfeed conduit. The inner tube space is preferably arranged close to, more preferably around, the heat storage element. The outer tube space is preferably arranged around the inner tube space.

The fluid flowing from the inner tube space to the outer tube space in use creates flow, which reduces the chances of disintegration of the fluid. A further advantage is that the fluid flows along the heating element first and is thereby heated effectively.

**In** an embodiment according to the invention the throughfeed conduit is connected on a first side of the tube and the liquid connection between the inner tube space and the outer tube space is positioned at a second, opposite side.

The throughfeed conduit can comprise the feed conduit and discharge conduit. By positioning the throughfeed conduit and the fluid connection on opposite sides a flow is realized over the whole length of the tube. This improves the heat transfer and reduces the chances of disintegration of the fluid due to overheating.

**In** an embodiment according to the invention the device further comprises at least one spacer arranged in the inner tube space and/or outer tube space.

The distance between the separate parts in the tube is maintained by the spacer. This prevents an undesirable reduction or increase of the inner tube space and/or outer tube space, for instance expansion of the housing due to heat. The throughflow in the inner tube space and/or outer tube space is maintained thereby.

The spacers can each be a suitable element placeable between two tubes. An example of a spacer is a chain of links positioned around a tube. The at least one spacer can alternatively or additionally also be a ring or block.

**In** an embodiment according to the invention the flow generating element comprises a helical element positioned round the heat storage element.

The helical element preferably extends in the longitudinal direction of the tube. The throughfeed conduit is preferably connected operatively to a front side and rear side of the tube, as seen in longitudinal direction. The fluid is thereby able to flow from the front to the rear, or vice versa. This reduces the chances of the fluid disintegrating due to excessive heating. The helical element may comprise a screw.

In an embodiment according to the invention the helical element comprises a screw conveyor which is configured to rotate.

Rotation of the screw conveyor creates a flow in the fluid which is present in the tube. This reduces the chances of the fluid disintegrating due to excessive heating.

In an embodiment according to the invention the device further comprises an expansion housing which is provided at least partially round at least a part of the number of tubes and which is configured to allow for expansion of the at least one tube during heating.

The expansion housing is a housing which is arranged at least partially round at least one of the number of tubes. The expansion housing can be positioned all around the tube. The expansion housing can be positioned round all tubes. An expansion space is provided between the expansion housing and the tube. The expansion space provides the tube with the option of expanding due to heating. Owing to the expansion housing, no counterforce, for instance due to the force of gravity of the energy storage material, is exerted on the expansion of the tube. There is hereby less risk of damage to the tubes, this extending the lifespan of the device.

In an embodiment according to the invention at least a part of the number of tubes protrudes partially from the storage space to allow for expansion of the tube during heating.

The expansion space provides the tube with the option of expanding due to heating. There is hereby less risk of damage to the tubes, this extending the lifespan of the device.

In an embodiment according to the invention the device has a storage state and a discharge state, wherein in the storage state the three-way valve is set to circulate the fluid in the throughfeed conduit and tubes and wherein in the discharge state the three-way valve is set to feed the fluid at least partially through the discharge conduit.

In an embodiment according to the invention the device further comprises the fluid which is provided in at least a part of the number of tubes and the throughfeed conduit.

Owing to the fluid, the heat can be readily conducted from the electric heating element to the energy storage material and from the energy storage material to the heat exchanger.

In an embodiment according to the invention the fluid comprises synthetic oil.

The fluid is preferably synthetic thermal oil, since the boiling point thereof is high, up to as much as 400°C. This reduces the chances of evaporation of the fluid, and thereby the chances of energy loss.

In an embodiment according to the invention the device further comprises insulating material which is arranged on an outer side of the storage space.

Owing to the insulating material, the energy stored in the energy storage material is relinquished less readily to the surrounding area. The energy hereby remains stored in the energy storage material for longer, which is advantageous for the efficiency of the device. The advantage is that the energy which is stored in summer can actually be used in winter to heat a building.

In an embodiment according to the invention the insulating material comprises mineral wool.

Mineral wool is an effective insulating material with a high insulating value.

In an embodiment according to the invention the energy storage material comprises basalt and/or magnetite.

Basalt is a type of stone with a relatively high heat capacity. A large amount of electrical energy can hereby be stored in the form of thermal energy. This enhances the capacity of the device. A further advantage is that basalt is relatively inexpensive, whereby a cost-efficient device for storing energy can be realized.

Magnetite is an iron ore with a very high heat capacity, this increasing the total amount of thermal energy which can be stored in the device according to the invention. Experiments have shown that the storage capacity of magnetite lies up to 70% higher than for instance basalt. Less storage space is hereby needed for the same storage capacity of thermal energy. Magnetite can further be heated to very high temperatures, as high as 1000°C. This has the result that a large amount of thermal energy can be stored in the energy storage material.

In an embodiment according to the invention the device further comprises a controller for individually controlling the heat storage elements and/or the pump.

Owing to the controller, the device can switch between the storage state and the discharge state, or a combination thereof, in simple manner, optionally without interposing of a user. An efficient and remotely controllable device is hereby realized.

The invention further relates to a system for storing energy, comprising:
- a device according to any one of the embodiments described above; and
- a trough mirror which is arranged outside the storage space and is positioned such that a focal point of the trough mirror is aimed at the discharge conduit.

The trough mirror is a reflective element which has a focal point of focal surface, for instance a line, where electromagnetic radiation falling onto the reflective element is concentrated. The system has similar advantages and effects as described for the device. The trough mirror particularly has the advantage that additional energy is added to the fluid flowing through the discharge conduit in efficient manner.

The invention further relates to a method for storing energy, comprising of:
- providing a device or a system according to any one of the embodiments described above; and
- heating the heat storage element;
- making the fluid flow; and
- heating the energy storage material by transferring the heat from the energy storage element to the energy storage material.

The method has similar advantages and effects as described for the device and the system.

In an embodiment according to the invention the method further comprises of:
- extracting heat from the energy storage material by the flowing of the fluid through the discharge conduit.

Further features, advantages and details of the invention are described on the basis of embodiments thereof, wherein reference is made to the accompanying drawings, in which:
- figure 1 shows a schematic side view of a device according to the invention;
- figures 2A-B show a schematic side view of tubes according to the invention;
- figures 2C-D show a schematic and perspective view of a tube according to the invention; and
- figure 3 shows a schematic representation of a system according to the invention.

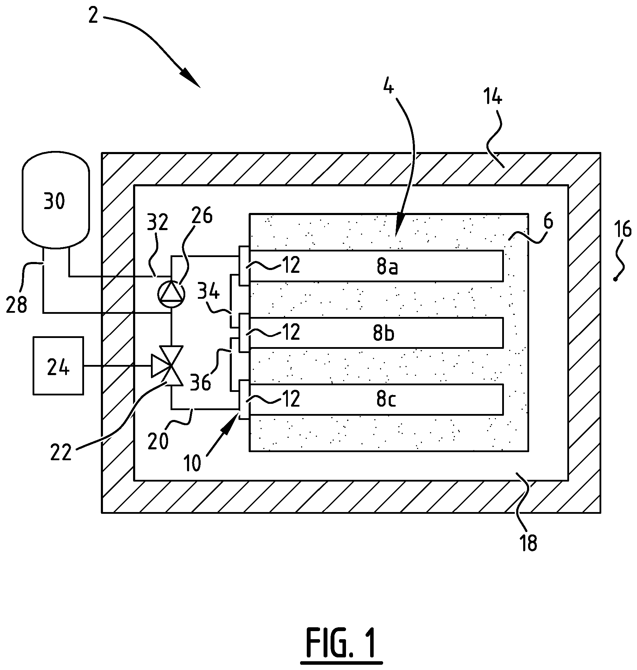

Device 2 (figures 1A-B) comprises a storage space 4 in which energy storage material 6 is provided. In the shown embodiment the energy storage material takes the form of basalt rocks. Thermal oil can optionally be provided in the space between the basalt rocks. The basalt rocks can vary in size, for instance from 1 mm to 50 centimetres. By filling the space between the basalt rocks with thermal oil the entire volume of storage space 4 is used effectively for the purpose of storing energy. Arranged on the outer side of energy storage space 4 is insulating material 14, taking the form of foam glass in the shown embodiment. Foam glass has the advantage of having a very high insulating value. Insulating material 14 can hereby prevent the heat in energy storage material 6 from disappearing to surrounding area 16. A further advantage of foam glass is that it is resistant to liquid, whereby it will still maintain its insulating function during contact with thermal oil or rain. Glass wool is alternatively used as insulating material 14.

Tubes 8 are further arranged in storage space 4. In the shown embodiment three cylindrical tubes 8a, 8b and 8c are positioned one above the other. Each of the tubes 8a, 8b, 8c is provided with a separate opening 10. Openings 10 are closed off from surrounding area 16 and intermediate space 18 by means of flange connection 12. Flange connection 12 is releasable, such that opening 10 provides access to an inner space of tube 8. It will be apparent that it is also possible according to the invention to apply tubes with a different shape and/or a different number of tubes. Intermediate space 18 is provided between storage space 4 and insulating material 14. Tubes 8a, 8b, 8c are brought into fluid connection with each other by means of first throughfeed conduit 20, second throughfeed conduit 34 and third throughfeed conduit 36. Three-way valve 22 and pump 26 are arranged in first throughfeed conduit 20. Three-way valve 22 can be set to feed liquid to heat exchanger 24. Pump 26 is configured to feed liquid through throughfeed conduits 20, 34 and 36 and tubes 8a, 8b and 8c. Expansion tank 30 is further connected to first throughfeed conduit 20. Expansion tank 30 comprises feed conduit 28 and return conduit 32 between which pump 26 is arranged. Owing to expansion tank 30, liquid can expand during heating without pressure loss in the system. Three-way valve 22 and pump 26 are positioned in intermediate space 18. Alternatively, three-way valve 22, pump 26 and/or expansion tank 30 can also be positioned outside insulating material 14.

In the shown embodiment tube 8a is in fluid connection with tube 8c by means of first throughfeed conduit 20. Tubes 8a and 8b are in a fluid connection by means of second throughfeed conduit 34, and tubes 8b and 8c are in fluid connection by means of third throughfeed conduit 36. It will be apparent to the skilled person that other configurations of throughfeed conduits for bringing the tubes into fluid connection with each other are also possible.

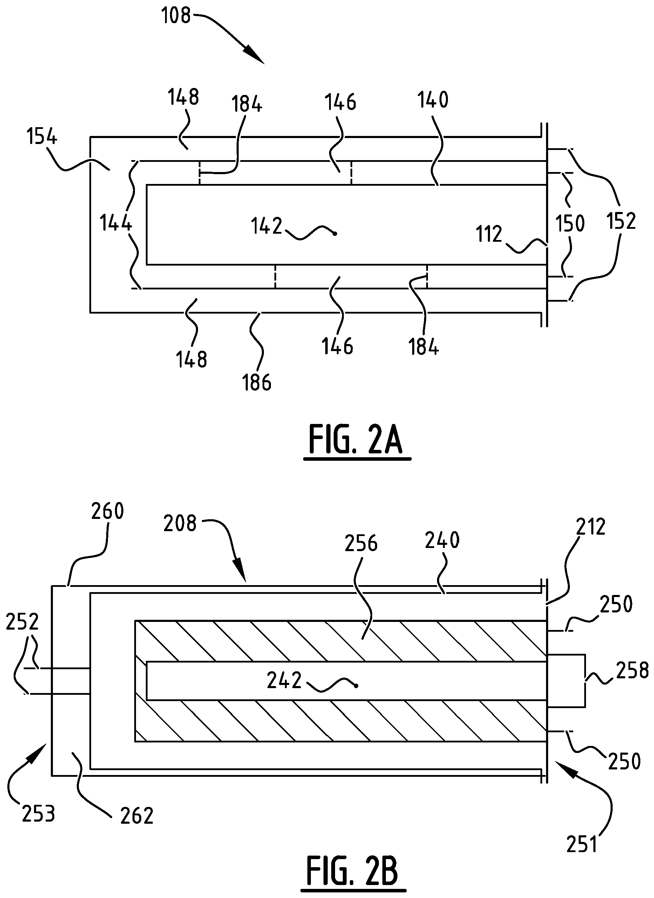

Tube 108 (figure 2A) comprises a tubular outer housing 140. Flange connection 112 is arranged on tubular outer housing 140. Electric heating element 142 is positioned inside tubular outer housing 140. Electric heating element 142 is connected to flange connection 112. Further arranged on flange connection 112 is tubular flow generating element 144, which is embodied as an inner tube. Flow generating element 144 defines inner tube space 146 and outer tube space 148. Inner tube space 148 is positioned between flow generating element 144 and outer housing 186. First throughfeed conduits 150 are connected to inner tube space 146 and second throughfeed conduits 152 are connected to outer tube space 148. Fluid can be supplied through first throughfeed conduits 150, after which the fluid is fed to rear space 154 through inner tube space 146 and then fed through outer tube space 148 to second throughfeed conduit 142, and so fed to a subsequent tube 108. It will be apparent to the skilled person that first throughfeed conduits 150 can also be return conduits and second throughfeed conduits 152 can also be feed conduits. In an embodiment spacers 184 can also be positioned between outer housing 140 and flow generating element 144. Spacers 148 can for instance be chains of links which are arranged around outer housing 140. The same spacers 184 can alternatively or additionally also be arranged between flow generating element 144 and outer housing 186.

Tube 208 (figure 2B) comprises housing 240 in which heating element 242 is provided. Electric heating element 242 is connected to flange connection 212. Helical element 256 is further provided round heating element 242. Helical element 256 is a flow generating element. First throughfeed conduits 250 are arranged on front side 251 in order to supply the fluid. Second throughfeed conduits 252 arranged on rear side 253 in order to discharge the fluid. Drive 258 is operatively connected to helical element 256. Drive 258 is configured to rotate helical element 256 so that additional flow is generated of the fluid which is supplied via first throughfeed conduits 250 and which is situated in tube 208. In an embodiment the diameter of helical element 256 is preferably substantially equal to the diameter of tube 240. The diametric outer end of helical element 256 is thereby ladjacent to tube 240. In an embodiment the diameter of helical element 256 is a part of the diameter of tube 240, for instance more than 70%, preferably more than 80% and most preferably more than 90%.

Expansion housing 260 is arranged round housing 240. Expansion housing 260 provides expansion space 262 in which housing 240 of tube 208 can expand during heating of tube 208.

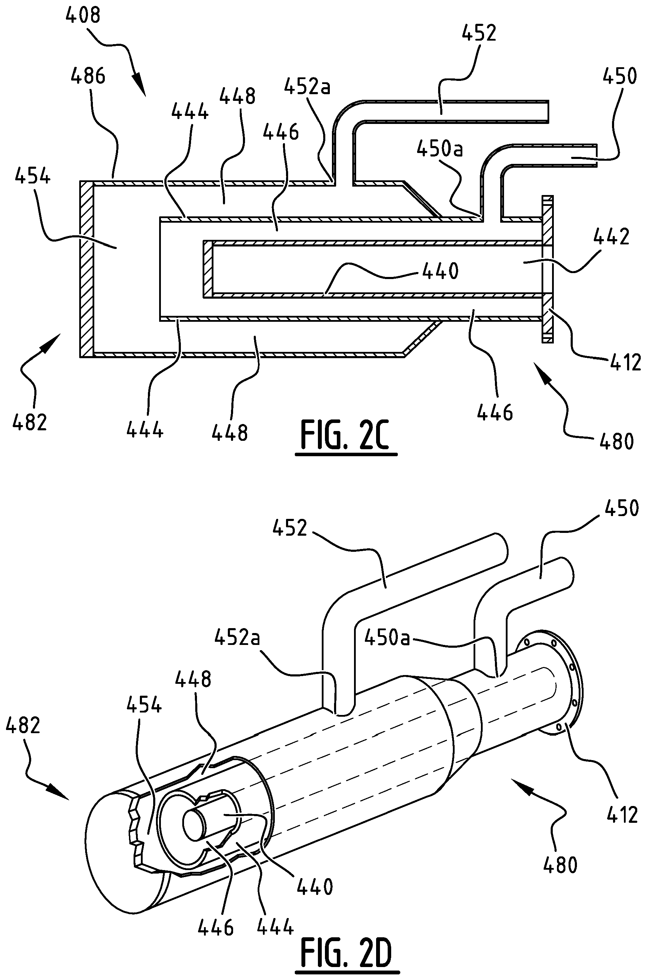

Tube 408 (figure 2C) comprises a tubular outer housing 440. Figures 2C and 2D differ relative to figure 2A in respect of first and second throughfeed conduits and the spacers. Flange connection 412 is arranged on tubular outer housing 440. Electric heating element 442 is positioned inside tubular outer housing 440. Electric heating element 442 is connected to flange connection 412. Further arranged on flange connection 412 is tubular flow generating element 444, which is embodied as an inner tube. Flow generating element 444 defines inner tube space 446 and outer tube space 448.

First throughfeed conduit 450 is connected to inner tube space 446 and second throughfeed conduit 452 is connected to outer tube space 448. Fluid can be supplied through first throughfeed conduits 450, after which the fluid is fed to rear space 454 through inner tube space 446 and then fed through outer tube space 448 to second throughfeed conduit 452, and so fed to a subsequent tube 408. It will be apparent to the skilled person that first throughfeed conduits 450 can also be return conduits and second throughfeed conduits 452 can also be feed conduits.

Flow generating element 444 (figure 2D) is tubular and connected to flange connection 412. Feed conduit 450 is connected to the flow generating element with T-piece 450a. Discharge conduit 452 is connected to the flow generating element with T-piece 452a. T-pieces 450a and 452a are connected to respectively inner tube space 446 and outer tube space 448. T-pieces 450a and 452a are connected on a first side 480, while rear space 454, in which inner tube space 446 and outer tube space 448 are in fluid connection with each other, is located on second side 482. First side 480 and second side 482 are positioned on opposite sides of tube 408. An effective liquid flow over the whole length through tube 408 is hereby realized.

Because the flow direction of feed conduit 450 is directed perpendicularly of outer housing 440, the supplied fluid is distributed uniformly in inner tube space 446. The fluid is then fed through inner tube space 446 to rear space 454. Fluid then travels through outer tube space 448 and is fed via connection 452a to discharge conduit 452.

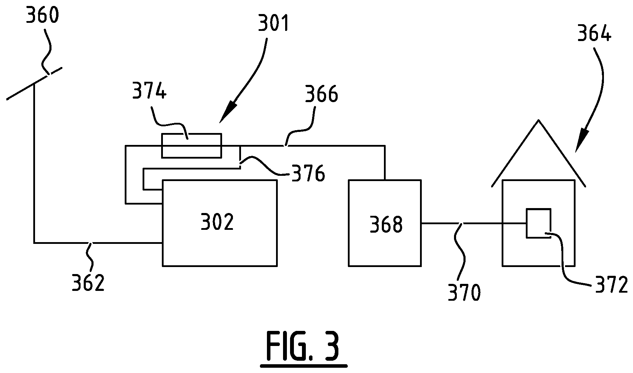

System 301 (figure 3) comprises solar panel installation 360 for generating electricity. The electricity is fed via electricity line 362 to device 302, where the electricity is converted into thermal energy by means of heat storage elements 142, 242. The thermal energy is relinquished by heat storage elements to the fluid, which then relinquishes the thermal energy to energy storage material 6. When building 364 must be heated, thermal energy can be extracted from energy storage material 306 by means of setting three-way valve 22 to the discharge state. The control of heat storage elements 42 and three-way valve 22 is controlled by a controller (not shown here).

The fluid which is fed through tubes 8 and absorbs the thermal energy can then be fed through conduit 366 to buffer vat 368, which comprises for instance water. Trough mirror 374 is positioned close to conduit 366. Trough mirror 374 is a parabolic mirror whose focal point is aimed at conduit 366. The solar energy is hereby added to the fluid flowing through conduit 366. The fluid can optionally be returned to device 302 by means of return conduit 376 so that the solar energy of trough mirror 374 can also be stored in energy storage material 6.

In buffer vat 368 the thermal energy in the fluid can be relinquished to the water in the buffer vat, for instance by a heat exchanger. A second heat exchanger in buffer vat 368 can then absorb the thermal energy and feed it by means of conduit 370 to central heating (CH) installation 372 in building 364. After this, CH installation 372 can heat building 364 with the thermal energy which was still stored efficiently in device 302 up to that point. It will be apparent that a different configuration of system 301 according to the invention is also possible. It is thus also possible to connect solar panel installation 360 directly to building 364 and to feed excess energy via conduit 362 to device 302. Alternatively or additionally, it is also possible to provide a coupling to the general electricity grid.

The present invention is by no means limited to the above described embodiments thereof. The rights sought are defined by the following claims, within the scope of which many modifications can be envisaged.

## Claims

1. Device (2) for storing energy, comprising:
- a storage space (4) comprising an energy storage material (6);
- a number of individual tubes (8) arranged in the energy storage material (6), wherein at least a part of the number of tubes (8) is in fluid connection with each other by means of a throughfeed conduit (20);
- at least one heat storage element (142) comprising an electric heating element which is arranged in at least one of the tubes (8) for the purpose of heating the energy storage material (6); and
- a pump (26) which is arranged in the throughfeed conduit (20) and is configured to pump (26) a fluid through the tubes (8) and throughfeed conduit (20),
- a flow generating element (144, 444) which is arranged in at least a part of the number of tubes (8) and which is configured to realize flow of the fluid in the tube,
wherein the flow generating element (144, 444) comprises an inner tube (144, 444) which is positioned between the tube and the heat storage element (142), wherein the inner tube (144, 444) defines an inner tube space (446) between the inner tube (144, 444) and the storage element and an outer tube space (448) between the inner tube and the tube, wherein the inner tube space (446) and outer tube space (448) are in fluid connection with each other.

2. Device (2) according to claim 1, wherein the inner tube space (446) is connected to a feed conduit and an outer tube space (448) to a discharge conduit, wherein the fluid flows from the inner tube space (446) to the outer tube space (448) in use.

3. Device (2) according to claim 1 or 2, wherein the throughfeed conduit (20) is connected on a first side of the tube and the liquid connection between the inner tube space (446) and the outer tube space (448) is positioned at a second, opposite side.

4. Device (2) according to claim 1, 2 or 3, further comprising at least one spacer arranged in the inner tube space (446) and/or outer tube space (448).

5. Device (2) according to any one of the claims 1-4, wherein the flow generating element comprises a helical element positioned round the heat storage element (142).

6. Device (2) according to claim 5, wherein the helical element comprises a screw conveyor which is configured to rotate.

7. Device (2) according to any one of the foregoing claims, further comprising a three-way valve (22) arranged in the throughfeed conduit (20), further comprising a discharge conduit which is connected to the three-way valve (22) and is configured to be connected to a heat exchanger, preferably further comprising a heat exchanger which is connected to the discharge conduit.

8. Device (2) according to any one of the foregoing claims, further comprising an expansion tank (30) which is connected to the throughfeed conduit (20) and which is configured to accommodate expansion of the fluid during heating, and/or further comprising an expansion housing (260) which is provided at least partially round at least a part of the number of tubes (8) and which is configured to allow for expansion of the at least one tube during heating, and/or wherein at least a part of the number of tubes (8) protrudes partially out of the storage space (4) to allow for expansion of the tube during heating, and/or wherein the device (2) has a storage state and a discharge state, wherein in the storage state the three-way valve (22) is set to circulate the fluid in the throughfeed conduit (20) and tubes (8) and wherein in the discharge state the three-way valve (22) is set to feed the fluid at least partially through the discharge conduit.

9. Device (2) according to any one of the foregoing claims, further comprising the fluid which is provided in at least a part of the number of tubes (8) and the throughfeed conduit (20), wherein the fluid preferably comprises synthetic oil.

10. Device (2) according to any one of the foregoing claims, further comprising insulating material arranged on an outer side of the storage space (4), wherein the insulating material preferably comprises mineral wool.

11. Device (2) according to any one of the foregoing claims, wherein the energy storage material (6) comprises basalt and/or magnetite, and/or further comprising a controller for individually controlling the heat storage element (142)s and/or the pump (26).

12. System for storing energy, comprising:
- a device (2) according to any one of the foregoing claims; and
- a trough mirror which is arranged outside the storage space (4) and is positioned such that a focal point of the trough mirror is aimed at the discharge conduit.

13. Method for storing energy, comprising of:
- providing a device (2) according to any one of the claims 1-11 or a system according to claim 12; and
- heating the heat storage element (142);
- making the fluid flow; and
- heating the energy storage material (6) by transferring the heat from the energy storage element to the energy storage material (6),
further preferably comprising the steps of:
- extracting heat from the energy storage material (6) by the flowing of the fluid through the discharge conduit.

## Patentansprüche

1. Vorrichtung (2) zum Speichern von Energie, umfassend
- einen Speicherraum (4), umfassend ein Energiespeichermaterial (6);
- eine Anzahl von einzelnen Rohren (8), die in dem Energiespeichermaterial (6) angeordnet sind, wobei mindestens ein Teil der Anzahl von Rohren (8) mittels einer Durchführungsleitung (20) in Fluidverbindung miteinander steht;
- mindestens ein Wärmespeicherelement (142), umfassend ein elektrisches Wärmeelement, das in mindestens einem der Rohre (8) zwecks eines Erwärmens des Energiespeichermaterials (6) angeordnet ist; und
- eine Pumpe (26), die in der Durchführungsleitung (20) angeordnet ist und konfiguriert ist, um ein Fluid durch die Rohre (8) und die Durchführungsleitung (20) zu pumpen (26),
- ein Strömungserzeugungselement (144, 444), das in mindestens einem Teil der Anzahl von Rohren (8) angeordnet ist und das konfiguriert ist, um eine Strömung des Fluids in dem Rohr zu realisieren, wobei das Strömungserzeugungselement (144, 444) ein Innenrohr (144, 444) umfasst, das zwischen dem Rohr und dem Wärmespeicherelement (142) positioniert ist, wobei das Innenrohr (144, 444) einen Innenrohrraum (446) zwischen dem Innenrohr (144, 444) und dem Speicherelement und einen Außenrohrraum (448) zwischen dem Innenrohr und dem Rohr definiert, wobei der Innenrohrraum (446) und der Außenrohrraum (448) in Fluidverbindung miteinander stehen.

2. Vorrichtung (2) nach Anspruch 1, wobei der Innenrohrraum (446) mit einer Zufuhrleitung verbunden ist und ein Außenrohrraum (448) mit einer Abfuhrleitung, wobei das Fluid im Gebrauch von dem Innenrohrraum (446) zu dem Außenrohrraum (448) strömt.

3. Vorrichtung (2) nach Anspruch 1 oder 2, wobei die Durchführungsleitung (20) an einer ersten Seite des Rohrs verbunden ist und die Flüssigkeitsverbindung zwischen dem Innenrohrraum (446) und dem Außenrohrraum (448) an einer zweiten, gegenüberliegenden Seite positioniert ist.

4. Vorrichtung (2) nach Anspruch 1, 2 oder 3, ferner umfassend mindestens einen Abstandshalter, der in dem Innenrohrraum (446) und/oder Außenrohrraum (448) angeordnet ist.

5. Vorrichtung (2) nach einem der Ansprüche 1 bis 4, wobei das Strömungserzeugungselement ein spiralförmiges Element umfasst, das um das Wärmespeicherelement (142) positioniert ist.

6. Vorrichtung (2) nach Anspruch 5, wobei das spiralförmige Element eine Förderschnecke umfasst, die konfiguriert ist, um zu rotieren.

7. Vorrichtung (2) nach einem der vorstehenden Ansprüche, ferner umfassend ein Dreiwegeventil (22), das in der Durchführungsleitung (20) angeordnet ist, ferner umfassend eine Abfuhrleitung, die mit dem Dreiwegeventil (22) verbunden ist und konfiguriert ist, um mit einem Wärmetauscher verbunden zu werden, vorzugsweise ferner umfassend einen Wärmetauscher, der mit der Abfuhrleitung verbunden ist.

8. Vorrichtung (2) nach einem der vorstehenden Ansprüche, ferner umfassend einen Ausdehnungstank (30), der mit der Durchführungsleitung (20) verbunden ist und der konfiguriert ist, um eine Ausdehnung des Fluids während der Erwärmung aufzunehmen, und/oder ferner umfassend ein Ausdehnungsgehäuse (260), das mindestens teilweise um mindestens einen Teil der Anzahl von Rohren (8) bereitgestellt ist und das konfiguriert ist, um eine Ausdehnung des mindestens einen Rohrs während der Erwärmung zu ermöglichen, und/oder wobei mindestens ein Teil der Anzahl von Rohren (8) teilweise aus dem Speicherraum (4) herausragt, um eine Ausdehnung des Rohrs während der Erwärmung zu ermöglichen, und/oder wobei die Vorrichtung (2) einen Speicherzustand und einen Abfuhrzustand aufweist, wobei in dem Speicherzustand das Dreiwegeventil (22) eingestellt ist, um das Fluid in der Durchführungsleitung (20) und den Rohren (8) zirkulieren zu lassen, und wobei in dem Abfuhrzustand das Dreiwegeventil (22) eingestellt ist, um das Fluid mindestens teilweise durch die Abfuhrleitung zu führen.

9. Vorrichtung (2) nach einem der vorstehenden Ansprüche, ferner umfassend das Fluid, welches in mindestens einem Teil der Anzahl von Rohren (8) und der Durchführungsleitung (20) bereitgestellt ist, wobei das Fluid vorzugsweise synthetisches Öl umfasst.

10. Vorrichtung (2) nach einem der vorstehenden Ansprüche, ferner umfassend Isoliermaterial, das an einer Außenseite des Speicherraums (4) angeordnet ist, wobei das Isoliermaterial vorzugsweise Mineralwolle umfasst.

11. Vorrichtung (2) nach einem der vorstehenden Ansprüche, wobei das Energiespeichermaterial (6) Basalt und/oder Magnetit umfasst, und/oder ferner umfassend eine Steuerung zum individuellen Steuern des Wärmespeicherelements (142) und/oder der Pumpe (26).

12. System zum Speichern von Energie, umfassend:
- eine Vorrichtung (2) nach einem der vorstehenden Ansprüche; und
- einen Parabolrinnenspiegel, der außerhalb des Speicherraums (4) angeordnet und derart positioniert ist, dass ein Brennpunkt des Parabolrinnenspiegels auf die Abfuhrleitung gerichtet ist.

13. Verfahren zum Speichern von Energie, umfassend:
- Bereitstellen einer Vorrichtung (2) nach einem der Ansprüche 1 bis 11 oder eines Systems nach Anspruch 12; und
- Erwärmen des Wärmespeicherelements (142);
- Bewirken der Fluidströmung; und
- Erwärmen des Energiespeichermaterials (6) durch Übertragen der Wärme von dem Energiespeicherelement auf das Energiespeichermaterial (6), ferner bevorzugt umfassend die Schritte:
- Extrahieren von Wärme aus dem Energiespeichermaterial (6) durch das Strömen des Fluids durch die Abfuhrleitung.

## Revendications

1. Dispositif (2) de stockage d'énergie, comprenant :
- un espace de stockage (4) comprenant un matériau de stockage d'énergie (6) ;
- un certain nombre de tubes individuels (8) agencés dans le matériau de stockage d'énergie (6), dans lequel au moins une partie du nombre de tubes (8) est en liaison fluidique les uns avec les autres au moyen d'un conduit d'alimentation traversant (20) ;
- au moins un élément de stockage de chaleur (142) comprenant un élément chauffant électrique qui est agencé dans au moins l'un parmi les tubes (8) dans le but de chauffer le matériau de stockage d'énergie (6) ; et
- une pompe (26) qui est agencée dans le conduit d'alimentation traversant (20) et est conçue pour pomper (26) un fluide à travers les tubes (8) et le conduit d'alimentation traversant (20),
- un élément de génération d'écoulement (144, 444) qui est agencé dans au moins une partie du nombre de tubes (8) et qui est conçu pour réaliser un écoulement du fluide dans le tube, dans lequel l'élément de génération d'écoulement (144, 444) comprend un tube interne (144, 444) qui est positionné entre le tube et l'élément de stockage de chaleur (142), dans lequel le tube interne (144, 444) définit un espace de tube interne (446) entre le tube interne (144, 444) et l'élément de stockage et un espace de tube externe (448) entre le tube interne et le tube, dans lequel l'espace de tube interne (446) et l'espace de tube externe (448) sont en liaison fluidique l'un avec l'autre.

2. Dispositif (2) selon la revendication 1, dans lequel l'espace de tube interne (446) est relié à un conduit d'alimentation et un espace de tube externe (448) à un conduit d'évacuation, dans lequel le fluide s'écoule de l'espace de tube interne (446) vers l'espace de tube externe (448) en utilisation.

3. Dispositif (2) selon la revendication 1 ou 2, dans lequel le conduit d'alimentation traversant (20) est relié sur un premier côté du tube et la liaison liquide entre l'espace de tube interne (446) et l'espace de tube externe (448) est positionnée sur un second côté opposé.

4. Dispositif (2) selon la revendication 1, 2 ou 3, comprenant en outre au moins un espaceur agencé dans l'espace de tube interne (446) et/ou l'espace de tube externe (448).

5. Dispositif (2) selon l'une quelconque des revendications 1 à 4, dans lequel l'élément de génération d'écoulement comprend un élément hélicoïdal positionné autour de l'élément de stockage de chaleur (142).

6. Dispositif (2) selon la revendication 5, dans lequel l'élément hélicoïdal comprend un transporteur à vis qui est conçu pour tourner.

7. Dispositif (2) selon l'une quelconque des revendications précédentes, comprenant en outre une soupape à trois voies (22) agencée dans le conduit d'alimentation traversant (20), comprenant en outre un conduit d'évacuation qui est relié à la soupape à trois voies (22) et est conçu pour être relié à un échangeur de chaleur, comprenant de préférence en outre un échangeur de chaleur qui est relié au conduit d'évacuation.

8. Dispositif (2) selon l'une quelconque des revendications précédentes, comprenant en outre un réservoir d'expansion (30) qui est relié au conduit d'alimentation traversant (20) et qui est conçu pour recevoir l'expansion du fluide pendant le chauffage, et/ou comprenant en outre un boîtier d'expansion (260) qui est fourni au moins partiellement autour d'au moins une partie du nombre de tubes (8) et qui est conçu pour permettre l'expansion de l'au moins un tube pendant le chauffage, et/ou dans lequel au moins une partie du nombre de tubes (8) fait saillie partiellement hors de l'espace de stockage (4) pour permettre l'expansion du tube pendant le chauffage, et/ou dans lequel le dispositif (2) a un état de stockage et un état d'évacuation, dans lequel dans l'état de stockage la soupape à trois voies (22) est réglée pour faire circuler le fluide dans le conduit d'alimentation traversant (20) et les tubes (8) et dans lequel dans l'état d'évacuation la soupape à trois voies (22) est réglée pour alimenter le fluide au moins partiellement à travers le conduit d'évacuation.

9. Dispositif (2) selon l'une quelconque des revendications précédentes, comprenant en outre le fluide qui est fourni dans au moins une partie du nombre de tubes (8) et du conduit d'alimentation traversant (20), dans lequel le fluide comprend de préférence de l'huile synthétique.

10. Dispositif (2) selon l'une quelconque des revendications précédentes, comprenant en outre un matériau isolant agencé sur un côté externe de l'espace de stockage (4), dans lequel le matériau isolant comprend de préférence de la laine minérale.

11. Dispositif (2) selon l'une quelconque des revendications précédentes, dans lequel le matériau de stockage d'énergie (6) comprend du basalte et/ou de la magnétite, et/ou comprenant en outre un dispositif de commande pour commander individuellement l'élément de stockage de chaleur (142) et/ou la pompe (26).

12. Système de stockage d'énergie, comprenant :
- un dispositif (2) selon l'une quelconque des revendications précédentes ; et
- un miroir à auge qui est agencé à l'extérieur de l'espace de stockage (4) et est positionné de telle sorte
qu'un point focal du miroir à auge est orienté vers le conduit d'évacuation.

13. Procédé de stockage d'énergie, comprenant les étapes consistant à :
- fournir un dispositif (2) selon l'une quelconque des revendications 1 à 11 ou un système selon la revendication 12 ; et
- chauffer l'élément de stockage de chaleur (142) ;
- faire en sorte que le fluide s'écoule ; et
- chauffer le matériau de stockage d'énergie (6) en transférant la chaleur de l'élément de stockage d'énergie au matériau de stockage d'énergie (6), comprenant de préférence en outre les étapes consistant à :
- extraire de la chaleur du matériau de stockage d'énergie (6) par l'écoulement du fluide dans le conduit d'évacuation.
